(19) **Europäisches Patentamt**
**European Patent Office**
**Office européen des brevets**

(11) Veröffentlichungsnummer: **0 254 267**
**A2**

(12) **EUROPÄISCHE PATENTANMELDUNG**

(21) Anmeldenummer: 87110538.3

(22) Anmeldetag: 21.07.87

(51) Int. Cl.4: **G06F 13/36 , A01B 49/06 , A01C 7/06**

(30) Priorität: 24.07.86 DE 3625027

(43) Veröffentlichungstag der Anmeldung:
27.01.88 Patentblatt 88/04

(84) Benannte Vertragsstaaten:
**DE FR GB**

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ &**
**SEGETH**
**Kesslerplatz 1 Postfach 3055**
**D-8500 Nürnberg(DE)**

(54) **Landwirtschaftliches Arbeitsgerät mit prozessorunterstützter Gewinnung/Verarbeitung und Protokollierung von Informationen.**

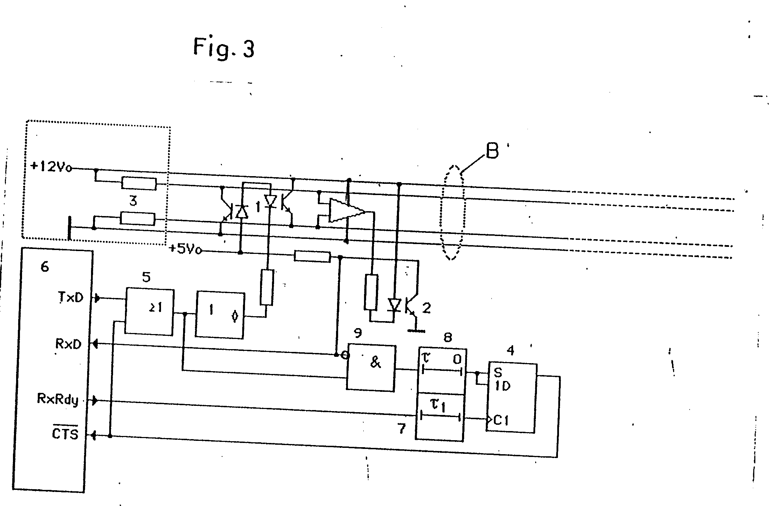

(57) Gleichberechtigte Prozessoren sind über eine gemeinsame serielle Busleitung miteinander verbunden. Die Prozessoren sind alle gleichberechtigt. Die zwischen den Prozessoren auszutauschenden Informationen werden hinsichtlich der Informationsart und ihrer Priorität codiert. Zur Vermeidung von Kollisionen beim Senden wird eine Schaltungsanordnung angegeben. (Fig. 3)

Fig. 3

EP 0 254 267 A2

## Landwirtschaftliches Arbeitsgerät mit prozessorunterstützter Gewinnung/Verarbeitung und Protokollierung von Informationen

Die Erfindung betrifft ein landwirtshaftliches Arbeitsgerät mit prozessorunterstützter Gewinnung/Verarbeitung und Protokollierung von Informationen, wobei mehrere gleichzeitig im Einsatz befindliche Arbeitsgeräte untereinander austauschbar sind.

In zunehmendem Maße werden landwirtschaftliche Maschinen durch eigene Prozessoren gesteuert und geregelt, im allgemeinen auf der Basis von Mikroprozessoren. Durch präzise, nur durch Rechnereinsatz mögliche Regelung von Bodenbearbeitung, Düngung, Saatausbringung und Schädlingsbekämpfung läßt sich das Verhältnis von Ertrag zu Material-, Energie-und Zeiteinsatz verbessern, die Bodenerosion vermeiden, die Schadstoffbelastung von Böden und Pflanzen durch Dünge-und Pflanzenschutzmittel verringern. Beim praktischen Einsatz werden jeweils andere dieser Maschinen, häufig auch mehrere gleichzeitig in verschiedenen Kombinationen, mit dem Schlepper verbunden. Alle Prozessoren müssen vom Fahrer mit Einstell-und Sollwerten versorgt, gleichzeitig ein-und ausgeschaltet und im Betrieb überwacht werden; alle Rechner benötigen zur Erfüllung ihrer Regelaufgaben zahlreiche aktuelle Meßwerte wie Geschwindigkeit, Fläche, Bodenfeuchte, Eindringtiefe, Neigung, Hydraulikdruck, Motordrehzahl und sollen Kennwerte ihrer Arbeit wie Material-und Kraftstoffverbrauch, Zugkräfte und Drehmomente, Arbeitstiefe und Drehzahl zur Anzeige bringen und in einem gemeinsamen Logbuch aufzeichnen.

Der Erfindung liegt die Erkenntnis zugrunde, daß nicht alle Prozessoren gleichzeitig in Sicht-und Reichweite des Schlepperfahrers montiert werden können und daß es unwirtschaftlich wäre, jeden Prozessor mit eigenen Bedienungs-und Anzeigeelementen und mit Sensoren für alle erforderlichen Meßgrößen zu versehen: Die Fahrerkabine wäre mit Prozessoren zugebaut, der Aufwand an Verdrahtung und Installationsarbeit beim Wechsel wäre untragbar, und zahlreiche Meßgrößen würden mit kostspieligen Sensoren mehrfach erfaßt. Erfindungsgemäß wird daher vorgesehen, jeden Prozessor unmittelbar an der von ihm zu steuernden Maschine zu montieren und ihn nur mit Sensoren für maschinenspezifische Meßgrößen zu versehen, und Bedien-und Anzeigeelemente einzusparen und stattdessen Mittel zur Informationsübertragung zwischen allen Rechnern und einer gemeinsamen Bedien-und Anzeigeeinheit in Fahrernähe bereitzustellen. Ein solches Rechnernetz unterscheidet sich in den Anforderungen erheblich von bekannten Netzen. Anzahl und Art der beteiligten Rechner ändern sich häufig. Es ist abzusehen, daß heute noch unbekannte Rechnertypen entstehen werden. Es ist daher keinem der angeschlossenen Rechner bekannt, welche und wieviele Informationen andere Rechner zu welchem Zeitpunkt benötigen oder absetzen haben und wo benötigte Informationen erhältlich sind. Dennoch muß die Beschaffung von Informationen so schnell erfolgen, daß Echtzeitbetrieb der Prozessoren über das Netz gewährleistet ist und daß eventuell auftretende Alarme unverzüglich übermittelt werden können.

Im Interesse eines möglichst geringen Verdrahtungsaufwandes kommt für ein solches Rechnernetz nur ein serieller Bus in Frage, der zugunsten der erforderlichen hohen Störsicherheit zweidrähtig erdsymmetrisch mit Abschirmungen betrieben werden soll. Bei dieser Netzstruktur sind alle Rechner mit Datensender und -empfänger am selben Adernpaar angeschlossen. Es sind daher bestimmte Verfahren erforderlich, um den Zugriff eines Senders auf den Bus zu regeln. Die wichtigsten dieser Verfahren sind als CSMA und Token-Access bekannt. Bei diesen Verfahren muß jede gesendete Information mit der Adresse des Empfängers versehen werden, und alle empfangenden Rechner müssen den Datenstrom dauernd auf das Auftreten ihrer eigenen Adresse überwachen. Einer Realisierung eines solchen Rechnernetzes auf landwirtschaftlichen Fahrzeugen in der beschriebenen Art steht aber das Problem entgegen, daß einem Rechner im Netz nicht bekannt ist, welche Rechner mit welchen Adressen außerdem im Netz vorhanden sind, und an welchen Anfragen und Informationen zu richten sind. Außerdem sind Anschlußschaltungen für die bekannten CSMA-und Token-Access-Netze zu aufwendig.

Der Erfindung liegt somit die Aufgabe zugrunde, ein landwirtschaftliches Arbeitsgerät der eingangs genannten Art derart auszugestalten, daß ein kollisionsfreier Austausch von Informationen zwischen Prozessoren möglich ist, die an verschiedenen austauschbaren Arbeitsgeräten angeordnet sind.

Diese Aufgabe wird erfindungsgemäß dadurch gelöst, daß die Prozessoren der untereinander austauschbaren und gleichzeitig im Einsatz befindlichen Arbeitsgeräte über einen digitalen seriellen Bus miteinander verbunden sind, dessen Arbeitspotential nicht von einem Ruhepotential überschreibbar ist, wobei jeder an den Bus über einen Sender und einen Empfänger angeschlossene Prozessor vorübergehend vom Bus abgeschaltet wird, an dessen Senderausgang ein anderes Potential als am Empfängereingang erscheint.

Der Datenempfänger eines Prozessors empfängt zunächst einmal die Bits einer Information, die vom Datensender des gleichen Prozessors an die Busleitung abgegeben werden. Sollte der Datensender eines anderen Prozessors ebenfalls eine Information an die Busleitung abgeben, so ist dies so lange unschädlich, als die Bits des zweiten Prozessors mit den Bits des ersten Prozessors übereinstimmen. Erst wenn die vom ersten Prozessor gesendeten Bits mit den vom zweiten Prozessor gesendeten Bits nicht übereinstimmen - also die Potentiale am Sendeausgang und am Empfängereingang eines der Prozessoren voneinander abweichen -, muß der Sendebetrieb eines der beiden Prozessoren blockiert werden, was auch geschieht, da aufgrund der Erfindung auf der Busleitung bspw. ein Bit mit dem Wert 1, der im nachstehend beschriebenen Ausführungsbeispiel mit dem Ruhepotential der Busleitung zusammenfällt, von einem Bit mit dem Wert 0 (Arbeitspotential) überschrieben wird, nicht aber umgekehrt.

In einer besonders einfachen Weise wird so eine Kollision beim Austausch von Informationen zwischen beliebigen, bspw. durch Adressierung oder die Zuordnung von Prioritäten nicht weiter ausgezeichneten Prozessoren einwandfrei verhindert.

Die Blockierung des Sendebetriebs der betroffenen bzw. der betroffenen Prozessoren wird erst aufgehoben, wenn nach Empfang eines Signals "Receiver Ready", das am Schluß einer jeden Information erscheint, also nach einer vorgegebenen Zeit kein neues Bit empfangen wird, das vom Ruhepotential der Busleitung abweicht. Jetzt kann der andere Prozessor den Sendebetrieb aufnehmen.

Vorzugsweise werden Informationen zwischen den Prozessoren ausgetauscht, die durch unterschiedliche Prioritäten gewichtet sind, indem sie mit einem Arbeitspotential unterschiedlicher vorgebener Länge beginnen. Wenn zwei Prozessoren gleichzeitig den Sendebetrieb aufnehmen, so behält derjenige Prozessor die "Oberhand", dessen abgegebene Information zu Beginn das länger anhaltende Arbeitspotential aufweist, das nach Rückkehr des Senderausgangs des anderen Prozessors mit dem kürzer anhaltenden Arbeitspotential in das Ruhepotential dieses überschreibt; so daß am Empfängereingang des anderen Prozessors nun das Arbeitspotential des einen Prozessors erscheint, während der Senderausgang des anderen Prozessors ja auf das Ruhepotential zurückging, weshalb jener andere Prozessor abschaltet.

Zweckmäßigerweise ist das Arbeitspotential ein niederohmiges Massepotential bzw. Betriebsspannungspotential.

Ferner ist es von Vorteil, wenn Prozessoren vorhanden sind, die eine Information erst an den Bus ausgeben, wenn diese Information von einem anderen Prozessor über den Bus angefragt ist. Auf diese Weise wird der Bus nicht unnötig belastet. Eine Information befindet sich nur dann auf dem Bus, wenn sie auch tatsächlich gebraucht wird.

In diesem Zusammenhang ist es zweckmäßig, einer Antwortinformation eine höhere Priorität als einer Anfrageinformation einzuräumen, um bei Ausgabe einer gewünschten Antwortinformation eine evtl. gleichzeitige diesbezügliche, und damit nun erledigte, Anfrage abzuschalten.

Im Zusammenhang damit ist es zweckmäßig, die den einzelnen Informationen zugeordneten Prioritäten und ggf. die einzelnen Codes für die Informationsarten in den Prozessoren in Festwertspeichern abzulegen.

Die Erfindung wird nun anhand der beiliegenden Zeichnung näher erläutert. In der Zeichnung stellen dar:

Fig. 1 und 2 schematisch typische unterschiedliche Konfigurationen eines Rechnernetzes auf landwirtschaftlichen Maschinen mit Angabe des Informationsflusses,

Fig. 3 die erfindungsgemäße Schaltungsanordnung für einen Prozessor,

Fig. 4 ein Impulsdiagramm zur Veranschaulichung der Blokkierung und der darauffolgenden Aufnahme des Sendebetriebs eines Prozessors,

Fig. 5 ein Impulsdiagramm zur Veranschaulichung der Vorgänge beim gleichzeitigen Sendeversuch zweier Prozessoren,

Fig. 6 den Aufbau eines Prioritätscodes und

Fig. 7 schematisch den Inhalt der Festwertspeicher einzelner Prozessoren und den Informationsfluß zwischen den Prozessoren.

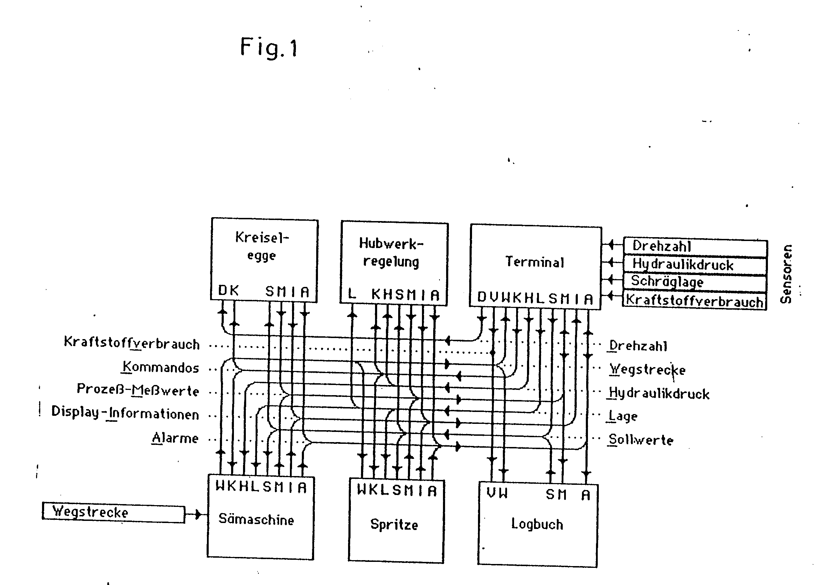

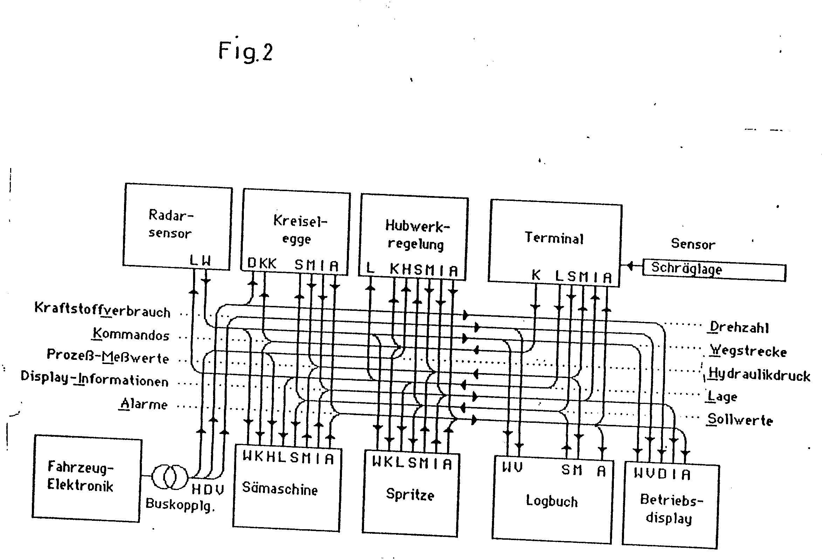

In den Fig. 1 und 2 stellen die Boxen die unterschiedlichen Prozessoren bei zwei unterschiedlichen Kombinationen von landwirtschaftlichen Maschinen dar. So sind in der Konfiguration nach Fig. 1 eine Sämaschine, eine Spritze, eine Kreiselegge und eine Hubwerkregelung vorgesehen, wobei die zugehörigen Prozessoren an den einzelnen Einrichtungen selbst angebracht sind, sowie ein Terminal und ein Logbuch, die sich auf dem Traktor zusammen mit den zugehörigen Prozessoren befinden. Die Sämaschine hat einen Sensor für die Wegstrecke. Diese Information wird nicht nur von der Sämaschine benötigt sondern auch vom Terminal und vom Logbuch, weshalb diese Information von dem Prozessor der Sämaschine (Signal W) an den Prozessor für das Terminal und den Prozessor für das Logbuch abgegeben wird. In Fig. 1 ist auch noch der Informationsfluß für andere Werte wie z.B. Drehzahl, Hydraulikdruck, Lage usw. angegeben, wobei der in Fig. 1 jeweils unterstrichene Buchstabe einer ausgeschriebenen Informationsbenennung als Abkürzung im Flußdiagramm verwendet worden ist.

Die Konfiguration nach Fig. 2 weicht von der Konfiguration nach Fig. 1 dadurch ab, daß zur Messung der Wegstrecke ein Radarsensor mit einem eigenen Prozessor sowie die Einrichtungen "Betriebsdisplay" und "Fahrzeugelektronik" mit ihren jeweiligen Prozessoren hinzugekommen sind. Der in Fig. 1 noch vorgesehene mechanische Sensor für die Wegstrecke wird nicht mehr benötigt. Jetzt wird die Information über die Wegstrecke vom Prozessor des Radarsensors an die Prozessoren der Sämaschine, der Spritze, des Logbuches und des Betriebsdisplays geliefert.

Wichtig ist es nun, das Rechnernetz so aufzubauen, daß einzelne Prozessoren ausgetauscht werden und neue Prozessoren hinzukommen können, ohne daß sonst irgendwelche Änderungen vorgenommen werden müßten. Dieses Problem wird gelöst mit Hilfe der in Fig. 3 nur als Beispiel gezeigten Schaltungsanordnung. Dort ist mit B eine Busleitung bezeichnet, die alle Prozessoren (bspw. der Fig. 1 oder der Fig. 2) miteinander verbindet. Mit dem Bezugszeichen 1 ist ein Datensender und mit dem Bezugszeichen 2 ein Datenempfänger bezeichnet, die über optische Koppelelemente mit der Busleitung B verbunden sind, wodurch sich ein besonders störsicherer Betrieb erreichen läßt. Durch das Zusammenwirken der Koppelelemente des Datensenders mit den nur in einem der Prozessoren, vorzugsweise im Terminal vorhandenen Speisewiderständen 3 wird außerdem erreicht, daß das Ruhepotential mit dem Pegel "1" (Koppelelement offen) von dem als niederohmiges Massepotential auftretenden Arbeitspotential mit dem Pegel "0" (Koppelelement durchgeschaltet) überschrieben wird, nicht aber umgekehrt.

Empfängt nun der Datenempfänger 2 eines Prozessors eine "0", weil ein anderer Prozessor eine "0" an die Busleitung B abgibt, während der zugehörige Datensender 1 eine "1" abgeben möchte, so wird dies durch eine UND-Schaltung 9, von der der am Datenempfänger liegende Eingang invertiert ist, erkannt. Nach einer Mindestdauer dieser Zustands, die durch ein Zeitglied 8 festgesetzt ist, um kurzfristige Störungen und geringfügige Taktabweichungen nicht wirksam werden zu lassen, wird ein Speicherglied 4 (D-Flip-Flop) gesetzt und damit die Sendung über ein ODER-Glied 5 sofort blockiert. Einem herkömmlichen Schnittstellenbaustein wird dies am CTS-Eingang angezeigt.

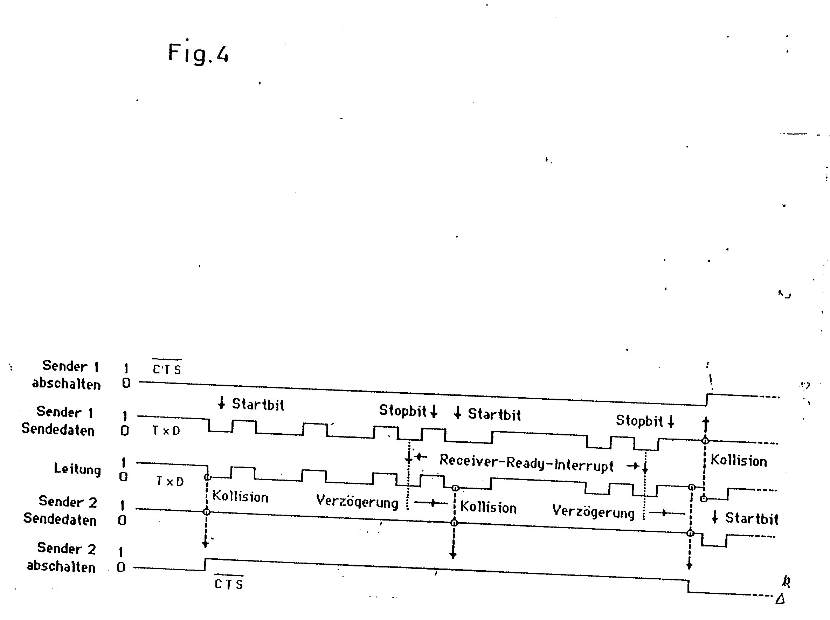

Beim Empfang des letzten Bits einer jeden Information erzeugt der Schnittstellenbaustein 6 ein üblicherweise zur Unterbrechung des Prozessors benutztes Signal "Receiver Ready" (RxRdy). Dieses steuert nach Durchlaufen einer weiteren Verzögerungsschaltung 7 das Speicherglied 4 so, daß bei fortgesetzter Sendung des anderen Senders die Blockierung des Sendebetriebs erhalten bleibt, während bei beendeter Sendung die Blockierung aufgehoben wird (sh. insbesondere auch Fig. 4). Die Verzögerungsschaltungen 7,8 können vorteilhaft in bekannter Weise durch Schieberegister realisiert werden, die von einem im Prozessor ohnehin vorhandenen Takt geeigneter Frequenz betrieben werden. Es sei darauf hingewiesen, daß für diese Schaltungsanordnung ausschließlich marktübliche Bauelemente verwendet werden können.

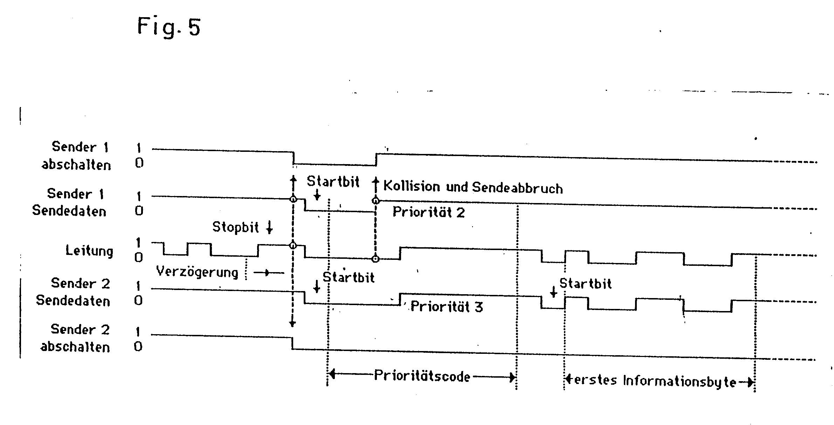

Fig. 4 zeigt die Wirkungsweise der Schaltungsanordnung für den Fall, daß ein Prozessor senden möchte, während ein anderer Prozessor sendet, während Fig. 5 die Wirkungsweise für den Fall zeigt, daß zwei Prozessoren gleichzeitig zu senden beginnen.

In der dritten Zeile der Fig. 4 ist der Zustand der Busleitung gezeigt. Diese befindet sich zunächst auf dem Ruhepotential (Pegel 1), da der Sender 1 (eines ersten Prozessors) und der Sender 2 (eines zweiten Prozessors), die an die Busleitung angeschlossen sind, sich ebenfalls auf dem Pegel 1 (sh. zweite und vierte Zeile der Fig. 4) befinden. An den CTS-Eingängen der Schnittstellenbausteine 6 beider Prozessoren liegt jeweils der Pegel 0 an, wie dies aus den vorherigen Ausführungen hervorgeht (erste und fünfte Zeile der Fig. 4). Das Ende des ersten Prozessors (zweite Zeile in Fig. 4) beginnt dann eine Information abzugeben (sh. "Startbit"). Der Ausgang des Senders 1 geht auf den Pegel 0 (Arbeitspotential). Dadurch geht zwangsläufig auch der Pegel der Busleitung auf 0. Am Empfängereingang des zweiten Prozessors liegt nun das Arbeitspotential an, während am Ausgang des Senders 2 des zweiten Prozessors immer noch das Ruhepotential (Pegel 1) vorhanden ist (sh. die erste Kollision zwischen der dritten und der vierten Zeile in Fig. 4). Dies hat zur Folge, daß in der vorhergehend beschriebenen Weise nach einer sehr kurzen Verzögerung, (nur um Störungen auszuschalten) durch die Verzögerungsschaltung 8 der zugehörige CTS-Eingang des zweiten Prozessors den Pegel 1 annimmt und damit der Sendebetrieb des zweiten Prozessors blockiert wird (sh. letzte Zeile der Fig. 4). Wie aus der ersten Zeile der Figur ersichtlich, wird hingegen der Pegel 0 am CTS-Eingang des ersten Prozessors nicht geändert, da Senderausgang und Empfängereingang des ersten Prozessors (vgl. auch zweite und dritte Zeile der Fig. 4) das gleiche Potential haben.

Am Schluß der Abgabe der ersten Information aus dem ersten Prozessor erscheint am Ausgang des Senders 1 ein Stopbit (sh. das erste Stopbit in Zeile 2 der Fig. 4). Dieses Stopbit erzeugt in allen Prozessoren das üblicherweise zur Unterbrechung der Prozessoren benutzte Signal "Receiver Ready" am RxRdy-Ausgang der Schnittstellenbausteine 6 der Prozessoren, die um die durch die Verzögerungsschaltung 7 jeweils gegebene Verzögerungszeit in jedem Prozessor zeitlich verzögert werden, bis sie auf die jeweiligen $\overline{CTS}$-Eingänge der Prozessoren einwirken können (sh. auch Fig. 3). Im vorliegenden Falle fängt aber der erste Prozessor wieder zu senden an (sh. das zweite Startbit in der zweiten Zeile der Fig. 4), bevor der zweite Prozessor zu senden anfängt. Nach Ablauf der durch die Verzögerungsschaltung 7 gegebenen Verzögerungszeit befindet sich also die Busleitung auf dem Pegel 0, während der Ausgang des Senders 2 nach wie vor den Pegel 1 aufweist (sh. die zweite Kollision zwischen der dritten und der vierten Zeile in Fig. 4). An den $\overline{CTS}$-Eingängen der beiden Prozessoren ändert sich somit nichts (sh. erste und fünfte Zeile der Fig. 4).

Nach Abgabe der zweiten Information aus dem ersten Prozessor erscheint das zweite Stopbit am Ausgang des Senders 1 (sh. zweite Zeile der Fig. 4). Alle Prozessoren geben wieder ein "Receiver Ready"-Signal ab, das über die Verzögerungsschaltung 7 verzögert wird. Nach Ablauf der Verzögerungszeit wird somit der $\overline{CTS}$-Eingang des zweiten Prozessors (sh. fünfte Zeile der Fig. 4) auf den Pegel 0 gebracht, so daß der zweite Prozessor am Sendebetrieb (wie alle anderen Prozessoren) nicht mehr gehindert ist. Dann beginnt der zweite Prozessor zu senden (sh. erstes Startbit in der vierten Zeile der Fig. 4), bevor die anderen Prozessoren, also der erste Prozessor, zu senden beginnt. Damit ist nunmehr eine Kollision zwischen dem Ausgang des Senders 1 des ersten Prozessors und dem Empfängereingang des ersten Prozessors (dessen Zustand ja gleich dem der Busleitung ist) gegeben (sh. die erste Kollision zwischen der zweiten und der dritten Zeile der Fig. 4).

In Fig. 5 ist der Sendebetrieb beider Prozessoren zunächst blockiert (sh. die Signale an den $\overline{CTS}$-Eingängen in der ersten und in der fünften Zeile der Fig. 5), weil ein dritter nicht gezeigter Prozessor an der Busleitung eine Information abgibt. Nach Erscheinen des Stopbits (sh. das Stopbit in der dritten Zeile der Fig. 5) wird in allen Prozessoren das "Receiver Ready"-Signal ausgelöst, das jeweils durch die Verzögerungsschaltung 7 verzögert wird. Nach Ablauf dieser Verzögerungszeit nehmen die $\overline{CTS}$-Eingänger aller Prozessoren den Pegel 0 an (sh. die erste Zeile und die letzte Zeile in Fig. 5), so daß alle Prozessoren sendebereit sind. Es fangen nunmehr zufällig der erste Prozessor und der zweite Prozessor gleichzeitig zu senden an (sh. die Startbits in der zweiten und in der vierten Zeile der Fig. 5). An

den $\overline{CTS}$-Eingängen der beiden Prozessoren ändert sich vorläufig nichts, da am Senderausgang und am Empfängereingang der ersten und des zweiten Prozessors jeweils der gleiche Pegel vorhanden ist (sh. den Ausgang des Senders 1 in der zweiten Zeile sowie den Zustand der Busleitung und damit den Empfängereingang des ersten Prozessors in der dritten Zeile und andererseits den Ausgang des Senders 2 des zweiten Prozessors in der vierten Zeile und den Empfängereingang des zweiten Prozessors, der ebenfalls zwangsläufig mit dem Zustand auf der Busleitung übereinstimmt). Die Pegel an den $\overline{CTS}$-Eingängen der beiden Prozessoren bleiben also auf 0, d.h. beide Prozessoren können senden, da deren Signale am Sendeausgang gleich sind. Eine Kollision zwischen Informationen kann noch nicht stattfinden.

Erst wenn sich die Signale an den Sendeausgängen der Prozessoren unterscheiden, muß eine Kollision verhindert werden. Dies geschieht zwangsläufig dann, wenn der Sendeausgang einer der Prozessoren den Pegel 1 annehmen will, während der Sendeausgang des anderen Prozessors noch den Pegel 0 beibehält (sh. die zweite und die vierte Zeile in Fig. 5). In diesem Falle weicht der Pegel am Sendeausgang des ersten Prozessors vom Pegel am Empfängereingang des ersten Prozessors ab, so daß dieser - wie vorhin beschrieben -zwangsläufig blockiert wird (sh. auch das $\overline{CTS}$-Signal in der erten Zeile der Fig. 5), während nach wie vor der Pegel am Empfängereingang (Busleitung in Zeile 3 der Fig. 5) mit dem Senderausgang des zweiten Prozessors übereinstimmt, so daß dieser nicht blockiert wird (sh. auch den Pegel 0 in der letzten Zeile in Fig. 5 am $\overline{CTS}$-Eingang des zweiten Prozessors).

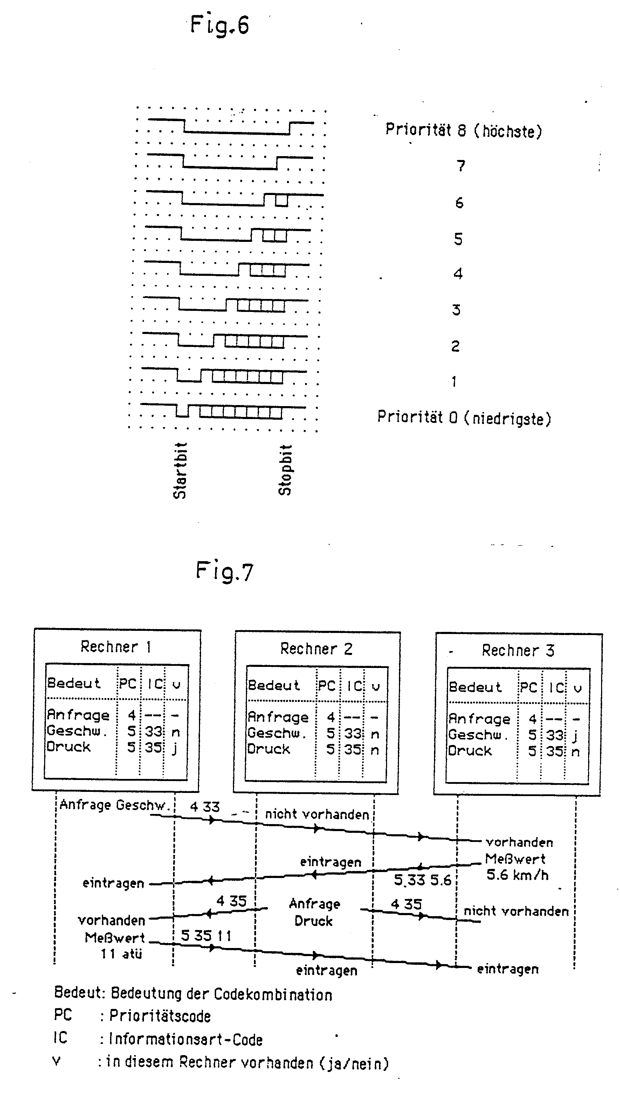

Die Dauer des ersten Rechtecksignals einer Informationseinheit bestimmt somit die Priorität dieser Informationseinheit. Es ist daher von Vorteil,jeder Informationsart wie bspw. Wegstrecke, Hydraulikdruck, Lage, Sollwerte usw. (sh. Fig. 1 und 2) eine Priorität zuzuordnen, deren Code vor dem Code der Informationsart steht, der seinerseits vor dem Code für den Meßwert steht. Außer in Fig. 5 sind derartige Prioritätscodes in Fig. 6 veranschaulicht.

Die Priorität wird dabei von der Art und Wichtigkeit der zu übermittelnden Information bestimmt. Jeder Prozessor weist nun einen Festwertspeicher auf, in dem für alle dem Prozessor bekannten Informationsarten sowohl der zutreffende Prioritätscode als auch der Code für die Informationsart gespeichert ist, wobei dei Codierungsvorschrift für alle bekannten und zukünftigen Prozessoren dieselbe ist. Dabei ist für alle Informationsarten, die Meßgrößen oder Einstellwerte beinhalten, außerdem gespeichert, ob der Prozessor über den Meßwert oder diesen Stellwert selbst verfügt. In dem Festwertspeicher sind ferner Befehlsfolgen gespeichert, die bewirken, daß beim Zugriff des Prozessors auf einen Meßwert, über den er nicht selber verfügt, eine Information auf den Bus gesendet wird, die aus dem gespeicherten Prioritätscode, dem gespeicherten Code für die Informationsart "Anfrage" und dem gespeicherten Informations-artcode für den benötigten Meßwert besteht. Beim Empfang einer Information, die aus dem Prioritäts- und dem Informationsartcode "Anfrage" und aus dem Informationsartcode für eine Meßgröße besteht, über die der empfangene Rechner nach Maßgabe seines Festwertspeichers verfügt, wird eine Information auf den Bus gesendet, die aus dem Prioritätscode für die Information, dem Informationsartcode und dem Code für den Meßwert besteht. Alle sonstigen Rechner, die diese Information bzw. diesen Meßwert ebenfalls benötigen, erkennen diese Information, nehmen den Meßwert auf und unterlassen eine eigene Anfrage. Jeder Prozeßrechner kann auch andere durch die entsprechenden gespeicherten Prioritäts-und Informationsartcodes gekennzeichnete Informationen, die z.B. eine Anzeige, einen Alarm oder einen Einstellbefehl an ein Stellorgan enthalten, ohne Angabe oder Kenntnis des Empfängers auf den Bus senden. Der zuständige Empfänger erkennt dies aufgrund des in seinem Festwertspeicher enthaltenen Informationsartcodes und verarbeitet die Information in der richtigen Art. Dies ist in Fig. 7 veranschaulicht.

Zu Fig. 6 ist noch nachzutragen, daß die Störbarkeit umso geringer und die Priorität demzufolge umso höher ist, je später nach dem Startbit die erste "0" folgt. Werden zufällig von zwei Sendern gleichzeitig Informationen gleicher Priorität gesendet, so erfolgt die Störung zufällig nach der Lage der ersten Zusammentreffens von "0" und "1" im Informationsartcode oder Informationsteil. Bei völlig gleichen Sendeinformationen tritt keine Störung auf. Aus dem Bild ergibt sich ferner, daß die nach der ersten "1" des Prioritätscodes liegenden Bits für die Priorität unmaßgeblich sind. Sie können bereits für andere Informationen, z.B. für den Informationsartcode, benutzt werden.

Im erfindungsgemäßen Rechnernetz sind die Prozeßrechner alle gleichberechtigt. Ein Mastercomputer ist nicht vorhanden.

## Ansprüche

1. Landwirtschaftliches Arbeitsgerät mit prozessorunterstützter Gewinnung/Verarbeitung und Protokollierung von Informationen,
**dadurch gekennzeichnet,** daß die Prozessoren der untereinander austauschbaren und gleichzeitig im Einsatz befindlichen Arbeitsgeräte über einen digitalen seriellen Bus (B) miteinander verbunden sind, dessen Arbeitspotential nicht von einem Ruhepotential überschreibbar ist, wobei jeder an den Bus über einen Sender (1) und einen Empfänger (2) angeschlossene Prozessor vorübergehend vom Bus (B) abgeschaltet wird, an dessen Sendeausgang ein anderes Potential als am Empfängereingang erscheint.

2. Landwirtschaftliches Arbeitsgerät nach Anspruch 1, **dadurch gekennzeichnet,** daß Informationen zwischen den Prozessoren ausgetauscht werden, die durch unterschiedliche Prioritäten gewichtet sind, indem sie mit einem Arbeitspotential unterschiedlicher vorgegebener Länge beginnen.

3. Landwirtschaftliches Arbeitsgerät nach Anspruch 1 oder 2, **dadurch gekennzeichnet,** daß das Arbeitspotential ein nieder ohmiges Massepotential bzw. Betriebsspannungspotential ist.

4. Landwirtschaftliches Arbeitsgerät nach einem der Ansprüche 1 bis 3, **dadurch gekennzeichnet,** daß Prozessoren vorhanden sind, die eine Information an den Bus ausgeben, wenn diese Information von einem anderen Prozessor über den Bus angefragt ist.

5. Landwirtschaftliches Arbeitsgerät nach Anspruch 4, **dadurch gekennzeichnet,** daß eine Antwortinformation eine höhere Priorität als eine Abfrageinformation aufweist.

6. Landwirtschaftliches Arbeitsgerät nach Anspruch 5, **dadurch gekennzeichnet,** daß die den einzelnen Informationen zugeordneten Prioritäten und ggf. die einzelnen Codes für die Informationsarten in den Prozessoren in Festwertspeichern abgelegt sind.

Fig.1

# Fig.2

Radar-sensor — L W

Kreisel-egge — DKK SMIA

Hubwerk-regelung — L KHSMIA

Terminal — K LSMIA

Sensor
Schräglage

Kraftstoffverbrauch ....

Kommandos ....

Prozeß-Meßwerte ....

Display-Informationen ....

Alarme ....

.... Drehzahl

.... Wegstrecke

.... Hydraulikdruck

.... Lage

.... Sollwerte

Fahrzeug-Elektronik — HDV Buskopplg.

WKHLSMIA Sämaschine

WKLSMIA Spritze

WV SM A Logbuch

WVDIA Betriebs-display

0 254 267

# Fig. 3

0 254 267

Fig.4

Sender 1 abschalten — $\overline{CTS}$

Sender 1 Sendedaten — TxD — ↓ Startbit — Stopbit↓ ↓ Startbit — Stopbit↓ — Kollision

Leitung — TxD — ↓← Receiver-Ready-Interrupt →↓ — Kollision

Sender 2 Sendedaten — Kollision — Verzögerung →← Kollision — Verzögerung →← ↓ Startbit

Sender 2 abschalten — $\overline{CTS}$

## Fig. 5

Sender 1 abschalten — 1 / 0

Sender 1 Sendedaten — 1 / 0 — ↑ Startbit ↓ · ↑ Kollision und Sendeabbruch · Priorität 2

Leitung — 1 / 0 — Stopbit ↓

Sender 2 Sendedaten — 1 / 0 — Verzögerung → · ↓ Startbit · Priorität 3 · ↓ Startbit

Sender 2 abschalten — 1 / 0

←—— Prioritätscode ——→ ·|←erstes Informationsbyte→|

0 254 267

## Fig.6

Priorität 8 (höchste)

7

6

5

4

3

2

1

Priorität 0 (niedrigste)

Startbit

Stopbit

## Fig.7

| Rechner 1 | | | |
|---|---|---|---|
| Bedeut | PC | IC | v |
| Anfrage | 4 | -- | - |
| Geschw. | 5 | 33 | n |
| Druck | 5 | 35 | j |

| Rechner 2 | | | |
|---|---|---|---|
| Bedeut | PC | IC | v |
| Anfrage | 4 | -- | - |
| Geschw. | 5 | 33 | n |
| Druck | 5 | 35 | n |

| Rechner 3 | | | |
|---|---|---|---|
| Bedeut | PC | IC | v |
| Anfrage | 4 | -- | - |
| Geschw. | 5 | 33 | j |
| Druck | 5 | 35 | n |

Anfrage Geschw.  4 33  -- nicht vorhanden

vorhanden

eintragen  Meßwert 5.6 km/h

5.33 5.6

eintragen

4 35  Anfrage Druck  4 35  nicht vorhanden

vorhanden

Meßwert 5 35 11
11 atü

eintragen  eintragen

Bedeut: Bedeutung der Codekombination

PC : Prioritätscode

IC : Informationsart-Code

v : in diesem Rechner vorhanden (ja/nein)